# EUROPEAN PATENT SPECIFICATION

(11) **EP 1 650 747 B1**
(45) Date of publication and mention of the grant of the patent: **17.02.2010**
(21) Application number: 04728458.3
(22) Date of filing: 20.04.2004
(51) Int. Cl.: G10L 21/04

(54) **AUDIO PLAYBACK PROGRAM, AUDIO PLAYBACK METHOD, AND AUDIO PLAYBACK DEVICE**
AUDIO-ABSPIELPROGRAMM, AUDIO-ABSPIELVERFAHREN UND AUDIO-ABSPIELEINRICHTUNG
PROGRAMME DE REPRODUCTION AUDIO, PROCEDE DE REPRODUCTION AUDIO ET APPAREIL DE REPRODUCTION AUDIO

(30) Priority: 02.05.2003 JP 2003127110
(43) Date of publication of application: 26.04.2006
(73) Proprietor: Konami Digital Entertainment Co., Ltd., Tokyo 107-8324 (JP)
(72) Inventor: UENISHI, Takahito Konami Corporation, Chiyoda-ku Tokyo 100-6330 (JP); Yamakawa, Makoto Konami Corporation, Chiyoda-ku Tokyo 100-6330 (JP)
(74) Representative: Style, Kelda Camilla Karen
(86) International application number: PCT/JP2004/005651
(87) International publication number: WO 2004/097800

(56) References cited:
- JP-A- 4 312 169
- JP-A- 7 153 188
- JP-A- 7 181 992
- JP-A- 8 146 985
- JP-A- 9 016 195
- JP-A- 11 249 676
- JP-A- 2001 005 476
- US-B1- 6 425 018

## Description

### Technical Field

The present invention relates to an audio playback program, an audio playback method and an audio playback device for playing back audio using audio data.

### Technical Background

Examples of conventional audio playback devices include cassette tape recorders and the like. With equipment for playing back analog audio such as cassette tape recorders, audio playback at standard speed (1x speed) is performed by driving a recording medium such as a cassette tape at a predetermined speed (the speed at the time of recording) so as to playback an audio signal recorded on the cassette tape. Furthermore, by varying the drive speed of the cassette tape, audio playback can be performed at a speed that is faster or slower than the standard speed.

Meanwhile, as distinct from such analog audio, digital audio playback equipment includes CD players, DVD players and the like. With this equipment, audio playback at standard speed can be performed by playing back audio data recorded on a CD or the like at a predetermined playback frequency. Audio playback can also be performed at a speed that is faster or slower than the standard speed by varying the playback frequency. Likewise, videogame devices such as household videogame consoles use computer readable media such as CDs and DVDs and employ playback principles similar to the playback principles described above for CD drives and the like, so as to playback digital audio at a standard speed or at speeds slower, or faster, than this speed.

However, with conventional audio playback devices, when analog audio or digital audio that was recorded at the standard speed is played back at a speed other than the standard speed, there is a discrepancy between the frequency of the audio that is played back and the basic frequency, which is to say the original audio frequency. For example, if audio is played back at a fast listening speed, which is two times faster than the standard speed, the frequency of the audio played back at the fast listening speed will be twice the basic frequency. Accordingly, the tone of the audio will be one octave higher than the normal audio, making it unpleasant for the user to listen to, or impossible for the user to understand.

Consequently, analog signal processing is used to correct audio frequency shifts resulting from switching playback speeds, whereby the audio is played back at a playback frequency identical to the basic frequency but at the fast listening speed. It is, nonetheless, difficult to perform correction resulting in natural sounding audio. Furthermore, natural sounding audio correction is performed by way of digital processing using software and the like, but depending on the processing power of the CPU (Central Processing Unit) and the like, it has not always been possible to switch playback speeds so as to respond instantaneously to commands from the user, which is to say, the audience, without creating an unnatural sensation. In particular, in videogame devices, in which not only audio processing, but also video processing is important, it was necessary to dedicate CPU processing capacity to complex video processing, and so it was not possible to switch playback speeds instantaneously in response to commands by the user, which is to say, the audience, without creating an unnatural sensation.

US-B1-6425018 discloses a portable music player wherein each song can have its own sampling rate.

### Disclosure of the Invention

According to a first aspect of the present invention, there is provided an audio playback program as set forth in claim 1.

According to a second aspect, there is provided an audio playback method as set forth in claim 11.

According to a third aspect, there is provided, an audio playback device as set forth in claim 12.

### Brief Description of the Drawings

FIG. 1 is a block diagram illustrating the structure of a videogame device in a first mode of embodiment of the present invention.
FIG. 2 is a functional block diagram illustrating the principal functions of the videogame device shown in FIG. 1.
FIG. 3 shows waveforms illustrating a 1x speed audio signal A1 for playback at 1x speed using a 1x speed audio data stream a1 and a 2x speed audio signal A2 for playback at 2x speed using a 2x speed audio data stream a2.
FIG. 4 is a flowchart illustrating one example of audio playback processing implemented by the video game device shown in FIG. 2.
FIG. 5 is a schematic view used to describe audio played back in standard speed playback mode and double-speed playback mode.
FIG. 6 is a flowchart illustrating one example of synchronization correction processing shown in FIG. 4.
FIG. 7 is a functional block diagram illustrating the principal functions of a videogame device according to a second mode of embodiment.
FIG. 8 is a flowchart illustrating one example of audio playback processing implemented by the videogame device shown in FIG. 7.
FIG. 9 is a schematic view illustrating one example of a data structure in a playback-time table.
FIG. 10 is a schematic view illustrating one example of a data structure in an audio data-size table.

FIG. 11 is a block diagram illustrating the structure of an audio playback device according to a third mode of embodiment of the present invention.

### Best Mode for Carrying Out the Invention

### First Embodiment

Hereinafter, a videogame device according to a first mode of embodiment of the present invention is described with reference to the drawings.

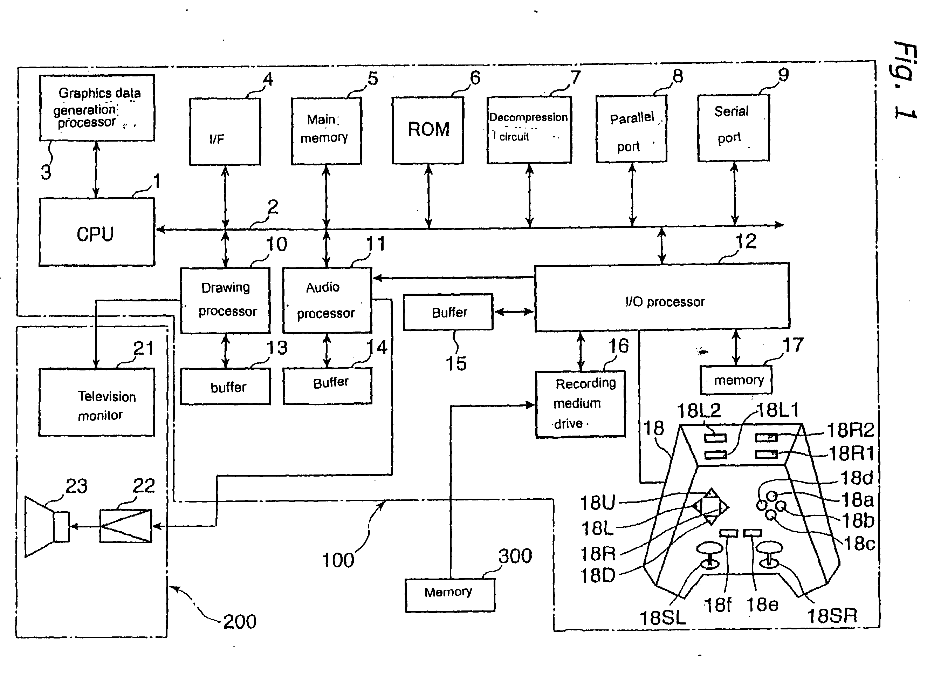

FIG. 1 is a block diagram illustrating the structure of a videogame device in a first mode of embodiment of the present invention. Note that, in the following description a household videogame device is described, wherein a household videogame console is connected to a household television as one example of a videogame device, but the present invention is not limited to this example, and can likewise be applied to a professional videogame device comprising a built-in monitor, a personal computer that functions as a videogame device by executing a videogame program, and the like.

The videogame device shown in FIG. 1 comprises a household game console 100 and a household television 200. The household game console 100 houses a computer readable recording medium 300, on which a videogame program and game data is recorded, and executes the game by suitably reading the videogame program and the game data.

The household game console 100 comprises a CPU (Central Processing Unit) 1, a bus line 2, a graphics data generation processor 3, an interface circuit (I/F) 4, a main memory 5, a ROM (Read-Only Memory) 6, a decompression circuit 7, a parallel port 8, a serial port 9, a drawing processor 10, an audio processor 11, an I/O processor 12, buffers 13-15, a recording medium drive 16, a memory 17 and a controller 18. The household television 200 comprises a television monitor 21, an amplification circuit 22 and a speaker 23.

The CPU 1 is connected to the bus line 2 and the graphics data generation processor 3. The bus line 2 comprises an address bus, a data bus, a control bus and the like, and interconnects the CPU 1, the interface circuit 4, the main memory 5, the ROM 6, the decompression circuit 7, the parallel port 8, the serial port 9, the drawing processor 10, the audio processor 11 and the I/O processor 12.

The drawing processor 10 is connected to the buffer 13. The audio processor 11 is connected to the buffer 14 and the amplification circuit 22. The I/O processor 12 is connected to the buffer 15, the recording medium drive 16, the memory 17 and the controller 18.

The television monitor 21 of the household television 200 is connected to the drawing processor 10. The speaker 23 is connected to the amplification circuit 22. Note that, in the case of a professional videogame device, the television monitor 21, the application circuit 22 and the speaker 23 may be housed in a single case together with the blocks that make up the household game console 100.

Furthermore, in cases where a personal computer, a workstation or the like serves as the core of the videogame device, a computer display corresponds to the television monitor 21 and the like. Furthermore, a portion of the program data recorded on the recording medium 300, or hardware on expansion boards mounted in expansion slots in the computer, corresponds to the decompression circuit 7, the drawing processor 10, the audio processor 11, the I/O processor 12 and the like.

Furthermore, hardware on expansion cards mounted in expansion slots in the computer corresponds to the interface circuit 4, the parallel port 8 and the serial port 9. Furthermore, storage areas in the main memory or expansion memory correspond to the buffers 13-15.

Next, the constituent elements shown in Fig. 1 are described. The graphics data generation processor 3 may be said to serve as a coprocessor of the CPU 1. In other words, the graphics data generation processor 3 performs calculations on coordinate changes and light sources such as fixed point matrix operations and vector calculations, as parallel processing.

The principal processing performed by the graphics data generation processor 3 is processing based on coordinate data for vertices, displacement data, rotation data and the like, in two-dimensional or virtual three-dimensional space for image data supplied from the CPU 1, so as to find address data for an image being processed in a predetermined display area and return this to the CPU 1, calculation of the brightness of an image according to the distance from a virtually defined light source, and the like.

The interface circuit 4 is used to interface with peripheral devices, for example pointing devices such as a mouse or a trackball. The main memory 5 comprises RAM (Random Access Memory) or the like. The ROM 6 stores program data constituting the operating system for the videogame device. This program corresponds to the BIOS (Basic Input Output System) of a PC.

The decompression circuit 7 performs decompression processing on compressed images that have been compressed by intra-encoding, based on the MPEG (Moving Picture Experts Group) standard for moving images or the JPEG (Joint Photographic Experts Group) standard for static images. Decompression processing includes decoding processing (decoding data that was encoded with VLC: Variable Length Code), inverse quantization processing, IDCT (Inverse Discrete Cosine Transform) processing, intraimage regeneration processing, and the like.

The drawing processor 10 performs drawing processing on the buffer 13 according to drawing commands issued by the CPU 1 at predetermined intervals of time T (for example, T = 1/60 sec. at one frame).

The buffer 13 may, for example, be constituted from a RAM and is divided into a display area (frame buffer) and a nondisplay area. The display area comprises a expansion area for the data to be displayed on the display of the television monitor 21. The nondisplay area comprises a storage area for data that defines skeletons, model data that defines polygons, animation data for moving models, pattern data for displaying the content of animations, texture data, color palette data, and the like.

Here, texture data is two-dimensional image data. Color palette data is data for specifying the color for texture data and the like. The CPU 1 writes these data from the recording medium 300 to the nondisplay area of the buffer 13 in advance, either at one time or at several different times in accordance with the advancement of the game.

Furthermore, drawing commands include drawing commands for drawing three-dimensional images using polygons and drawing commands for drawing ordinary two-dimensional images. Here, a polygon is a virtual two-dimensional polygonal shape, and triangles and squares can, for example, be used.

Drawing commands for drawing three-dimensional images using polygons are given variously for polygon vertex address data indicating the storage position of polygon vertex coordinate data in the display area of the buffer 13, texture address data indicating the storage position of texture applied to polygons in the buffer 13, color palette address data indicating the storage position of color palette data in the buffer 13 indicating the color of textures, and brightness data indicating the brightness of textures.

Among these data, polygon vertex address data in the display area is converted into two-dimensional polygon vertex coordinate data as the result of the graphics data generation processor 3 performing coordinate conversion based on polygon vertex coordinate data in virtual three-dimensional space, displacement data and rotation data from the CPU 1. The brightness data is determined by the graphics data generation processor 3, based on the distance from the position indicated by the polygon vertex coordinate data to a virtually disposed light source, after converting the coordinates from the CPU 1 as described above.

The polygon vertex address data indicates the address in the display area of the buffer 13. The drawing processor 10 performs processing that writes texture data corresponding to the display area range in the buffer 13, as indicated by three polygon vertex address data.

Objects such as characters within the game space are made up of a plurality of polygons. The CPU 1 stores coordinate data in virtual three-dimensional space for each polygon in the buffer 13, in conjunction with corresponding skeleton vector data. Then, when a character is moved on the display screen of the television monitor 21 or the like by way of operating the controller 18 described below, the following processing is performed in order to express the movement of the character or to change the viewpoint viewed by the character.

That is to say, the CPU 1 provides, to the graphics data generation processor 3, three-dimensional coordinate data for the polygon vertices stored in the nondisplay area of the buffer 13, and displacement data and rotation data for the polygons as found from the data for skeleton coordinates and the rotational movement thereof.

The graphics data generation processor 3 successively finds the three-dimensional coordinate data for the polygons after displacement and after rotation, based on the three-dimensional coordinate data of the vertices of the polygons and the displacement data and rotation data for the polygons.

Among the three-dimensional coordinate data for the polygons found in this manner, the horizontal and vertical direction coordinate data is supplied to the drawing processor 10 as address data in the display area of the buffer 13, which is to say, as polygon vertex address data.

The drawing processor 10 writes texture data indicated by the texture address data assigned in advance to the display area of the buffer 13, as indicated by the three polygon vertex address data. Consequently, objects are displayed on the display screen of the television monitor 21 wherein texture have been applied to a multiplicity of polygons.

Drawing commands for drawing ordinary two-dimensional images are given for vertex address data, texture address data, color palette address data indicating the storage position in the buffer 13 of color palette data, indicating the color of the texture data, and for brightness data indicating the brightness of the texture. Among these data, the vertex address data is produced by coordinate conversion, by the graphics data generation processor 3, of the vertex coordinate data in the two-dimensional plane from the CPU 1, based on displacement data and rotation data from the CPU 1.

The audio processor 11 stores ADPCM (Adaptive Differential Pulse Code Modulation) data, read from the recording medium 300, in the buffer 14 and uses the ADPCM data stored in the buffer 14 as a sound source. Furthermore, the audio processor 11 reads the ADPCM data from the buffer 14 according to a clock signal, for example with a frequency of 44.1 kHz.

The audio processor 11 performs processing such as noise addition, envelope setting, level setting and reverb addition on the ADPCM data that is read out. At this time, the audio processor 11 decoders the ADPCM data that has been read out to the original audio data, converts the audio data into an audio signal at the volume and playback frequency set by the I/O processor, as described below, and outputs this to the amplification circuit 22. Thereafter, the amplification circuit 22 amplifies the audio signal and outputs it to the speaker 23, so that the speaker 23 outputs the audio that has been played back.

If the audio data that is read from the recording medium 300 is PCM (Pulse Code Modulation) data such as CD-DA (Compact Disk Digital Audio), the audio processor 11 converts this audio data to ADPCM data. Furthermore, processing of the PCM data by programs is performed directly in the main memory 5. PCM data that has been processed in the main memory 5 is supplied to the audio processor 11 and converted to ADPCM data. Thereafter, the various types of processing described above are performed so that the audio is played back.

The I/O processor 12 not only performs input/output control, but also functions as a decoder. Various types of data such as image data, audio data and program data sent from the recording medium drive 17 are stored in the buffer 15, which is a working area; error correction processing based on ECC (Error Correction Code) is performed on the various data read from the buffer 15; and the various types of data on which error correction has been performed are supplied to the main memory 5 or the audio processor 11.

The main memory 5 or the audio processor 11 stores the audio data that has been supplied in the buffer 14. Furthermore, the I/O processor 12 sets the volume and the playback frequency for the audio processor 11 so as to playback the audio data that has been read from the buffer 14 in accordance with the playback mode or the like specified by the user, by way of the controller 18.

The recording medium drive 16 reads image data, audio data and program data from the recording medium 300 and supplies the data that has been read out to the I/O processor 12. A DVD-ROM drive, a CD-ROM drive, a hard disk drive, an optical disk drive, a flexible disk drive, a silicon disk drive, a cassette media reader, or the like may be used as the recording medium drive 16. In this case, a DVD-ROM, a CD-ROM, a hard disk, an optical disk, a flexible disk, semiconductor memory, or the like may be used as the recording medium 300.

Card memory can, for example, be used as the memory 17. Card memory can, for example, be used for such purposes as storing various game parameters at a cutoff point, so as to store the state of the game at the cutoff point, in the event that the game is interrupted.

The controller 18 is an operating device used by the user to input various types of operating commands and to send operating signals corresponding to the user operations to the CPU 1. The controller 18 comprises a first button 18a, a second button 18b, a third button 18c, a fourth button 18d, an up key 18U, a down key 18D, a left key 18L, a right key 18R. an L1 button 18L1, an L2 button 18L2, an R1 button 18 R1, an R2 button 18 R2, a start button 18e, a select button 18f, a left stick 18SL, and a right stick 18SR.

The up key 18U, the down key 18D, the left key 18L and the right key 18R may, for example, be used to give commands to the CPU 1 for moving a character or a cursor vertically and horizontally on the screen of the television monitor 21.

The start button 18e is used to indicate to the CPU 1 that the game program is to be loaded from the recording medium 300. The select button 18f is used for indicating to the CPU 1 various types of selections relating to the game program that is to be loaded in the main memory 5 from the recording medium 300.

With the exception of the left stick 18SL and the right stick 18SR, all of the buttons and keys on the controller 18 are ON/OFF switches which are turned ON from a neutral position by pressure resulting from externally pressing and turned OFF by returning to the neutral position when the pressing is released.

The left stick 18SL and the right stick 18SR are stick controllers having structures substantially the same as that of so-called joysticks. These stick controllers comprise an upright stick and have a constitution wherein this stick is supported at a predetermined position allowing for tilting forwards/backwards and left/right through 360°. With the upright position as the point of origin, the left stick 18SL and the right stick 18SR send an x coordinate for the left/right direction and a y coordinate for the forward/backwards direction, as a command signal to the CPU 1, by way of the I/O processor 12, in response to the angle of inclination and the direction of inclination of the stick.

Note that, the first button 18a, the second button 18b, the third button 18c, the fourth button 18d, the L1 button 18L1, the L2 button 18L2, the R1 button 18R1 and the R2 button 18R2 are used by various functions according to the game program loaded from the recording medium 300.

Next, the general operations of the videogame device are described. With the recording medium 300 loaded in the recording medium drive 16, the power switch (not shown in the drawing) is turned on so as to power up the videogame device. Thereupon, the CPU 1 instructs the recording medium drive 16 to read the game program from the recording medium 300 in accordance with the operating system stored in the ROM 6. As a result of this instruction, the recording medium drive 16 reads image data, audio data and program data from the recording medium 300. The image data, audio data and program data that has been read is supplied to the I/O processor 12 and error correction processing is performed on each of these data by the I/O processor 12.

The image data on which error correction processing has been performed by the I/O processor 12 is supplied to the decompression circuit 7, by way of the bus line 2. Image data that has been subj ected to decompression processing as described above by the decompression circuit 7 is supplied to the drawing processor 10 and written to the nondisplay area of the buffer 13 by the drawing processor 10. The audio data on which error correction processing has been performed by the I/O processor 12 is written to the main memory 5 or the buffer 14 by way of or the audio processor 11. Furthermore, program data on which error correction processing has been performed by the I/O processor 12 is written to the main memory 5.

Thereafter, the CPU 1 advances the videogame in accordance with the game program stored in the main memory 5 and the instructions of the user, which are given by way of the controller 18. That is to say, on the basis of the instructions given by the user using the controller 18, the CPU 1 suitably controls the image processing, the audio processing, the internal processing and the like.

Examples of image processing include calculating the coordinates for the skeletons or calculating the vertex coordinate data for the polygons from pattern data corresponding to the animation specified for the character, supplying the resulting three-dimensional coordinate data and point of view position data to the graphics data generation processor 3, and issuing drawing commands, including address data in the display address in buffer 13, which was found by the graphics data generation processor 3, and brightness data.

Examples of audio processing control include issuing audio output commands to the audio processor 11 and specifying levels, reverb and the like. Examples of internal processing control include calculations in response to operations from the controller 18.

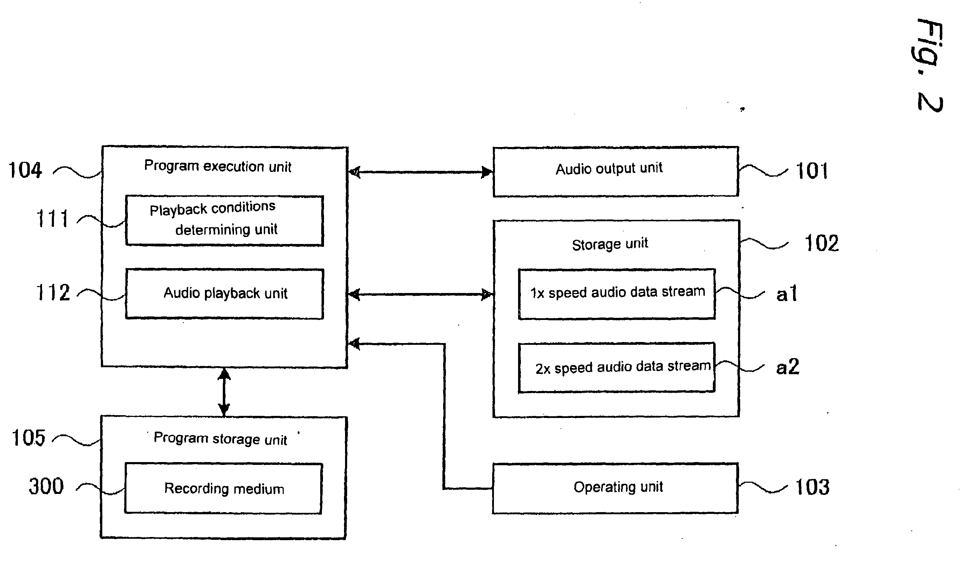

FIG. 2 is a functional block diagram illustrating the principal functions of the videogame device shown in FIG. 1. The videogame device comprises an audio output unit 101, a storage unit 102, a operating unit 103, a program execution unit 104 and a program storage unit 105. The audio output unit 101 is realized by way of the amplification circuit 22, the speaker 23 and the like shown in FIG. 1. The storage unit 102 is realized by way of the main memory 5 and the buffers 13-15 shown in FIG. 1.

The storage unit 102 stores a plurality of audio data streams, which are prepared in advance for playing back predetermined audio at a plurality of differing playback speeds, and which each correspond to one of the playback speeds (here, the 1x speed audio data stream al, read from the recording medium 300, is stored as the audio data for the first channel, and the 2x speed audio data stream a2 is stored as the audio data for the second channel). Here, the Lox speed audio data stream a1 is audio data prepared in advance for playing back predetermined audio (the speed at the time of recording) at standard speed, which is to say 1x speed; and the 2x speed audio data stream a2 is audio data prepared in advance for playing back predetermined audio (audio representing the same content as the audio that is played back at standard speed) at a fast listening speed. The term "fast listening speed" refers to a speed that is faster than the standard speed, and in this case 2x speed. Note that the term "standard audio" refers to audio that is played back at standard speed, while the term "fast listening audio" refers to audio that is played back at fast listening speed. "Predetermined audio" refers to audio where the expressed content and the conveyed content are identical, for example wherein the speech (words) played back on the basis of each data stream is word-for-word identical.

The operating unit 103 is realized by way of the controller 18 and the like, as shown in FIG. 1, and receives audio playback speed mode specification commands. The term "audio playback speed mode specification commands" refers to commands for playing back audio on the videogame device at the playback speed desired by the user. Audio playback speed mode specification commands include a standard speed playback mode specification command and a fast listening speed mode specification command. When a standard speed playback mode specification command is received by the operating unit 103, audio is output with the 1x speed audio data stream a1 played back at standard speed, so that the user can hear the audio that is played back at standard speed. When a fast listening speed playback mode specification command is received by the operating unit 103, audio is output with the 2x speed audio data stream a2 played back at fast listening speed, so that the user can hear the audio that is played back at fast listening speed.

The program execution unit 104 is realized by way of the CPU 1. the drawing processor 10, the audio processor 11. the I/O processor 12 and the like. The program execution unit 104 comprises a playback conditions determining unit 111 and an audio playback unit 112.

The playback conditions determining unit 111 is realized principally by the I/O processor 12 and the like, and sets the playback frequencies of the 1x speed audio data stream a1 and the 2x speed audio data stream a2 in the audio playback unit 112, so that the 1x speed audio data stream a1 and the 2x speed audio data stream a2 are synchronously played back at a speed corresponding to the audio playback speed mode specification command received by the operating unit 103. Furthermore, the playback conditions determining unit 111 sets the volumes for the 1x speed audio data stream a1 and the 2x speed audio data stream a2 in the audio playback unit 112 so that, depending on the audio playback speed mode, only one of the 1x speed audio, which is based on the 1x speed audio data stream a1, or the 2x speed audio, which is based on the 2x speed audio data stream a2, can be heard by the user.

The audio playback unit 112 is realized primarily by the audio processor 11 and the like and makes it possible for the 1x speed audio data stream a1 and the 2x speed audio data stream a2 to be synchronized and output at the playback frequency and volume set by the playback conditions determining unit 111. That is to say, the audio playback unit 112. plays back the 1x speed audio data stream a1 and the 2x. speed audio data stream a2 so that the playback positions thereof correspond, and renders these in a form that can be output. At this time, the audio playback unit 112 sets the volumes of the 1x speed audio data stream a1 and the 2x speed audio data stream a2 so that the user can only hear one of the 1x speed audio or the 2x speed audio, depending on the audio playback speed mode specification command. Consequently, the user can only hear one of the audios.

The program storage unit 105 is realized by way of the recording medium drive 16, in which the computer readable recording medium 300 is loaded, and the like, and videogame programs including an audio playback program are recorded on the recording medium 300. Note that, when the audio playback program is read from the recording medium 300 and this program is stored in the main memory 5, the main memory 5 functions as the program storage unit 105.

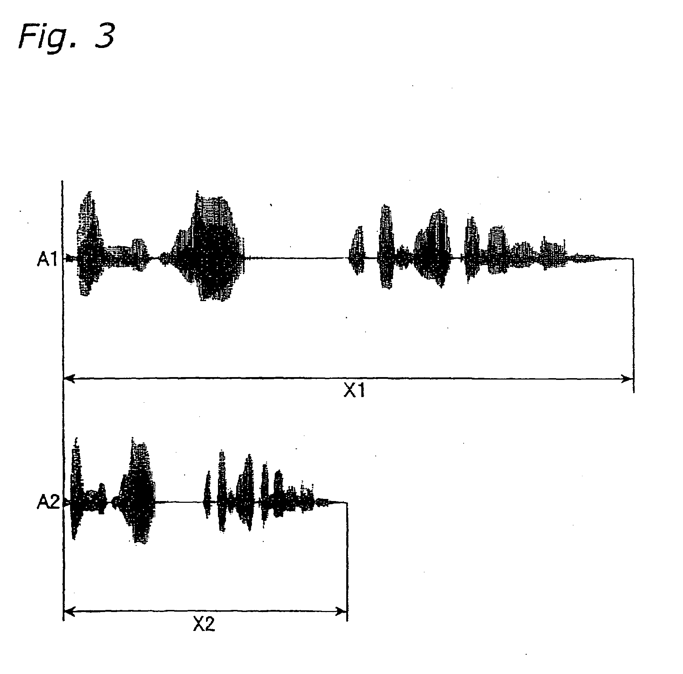

Next, the 1x speed audio data stream a1 and the 2x speed audio data stream a2 will be described in detail. FIG. 3 shows waveforms illustrating a 1x speed audio signal A1, for playback at standard speed using the 1x speed audio data stream a1, and a 2x speed audio signal A2, for playback at fast listening speed using the 2x speed audio data stream a2. Note that, in FIG. 3, the vertical axis represents amplitude and the horizontal axis represents time.

The 1x speed audio data stream a1 is audio data wherein audio has been recorded that is to be listened to by the user as standard speed audio; for example, audio data can be used wherein an actual human voice, such as a narrator giving descriptions relating to the videogame or the like, is recorded without modification. Meanwhile, the 2x speed audio data stream a2 is audio data on which audio conversion processing, such as tone conversion processing, has been performed on the 1x speed audio data stream a1 so that it can be played back as natural sounding audio with the same tone as at the standard speed when played back at fast listening speed.

In other words, the 2x speed audio data stream a2 is audio data that is created in advance by editing the 1x speed audio data stream a1 so that, when it is played back at fast listening speed, it will be played back at the same pitch as the 1x speed audio data stream a1. For example, this can be created at a playback time of one half, while keeping the tone of the 1x speed audio data stream a1, by using functions such as the "Change Duration" function in "Peak" which is a waveform editing software program produced by Berkley Integrated Audio Software. Note that, in addition to "Peak", the 2x speed audio data stream a2 can be generated by using "Time Compression/Expansion" in "Protools Software" produced by Avid Technology.

Note that, the 2x speed audio data stream is not limited to that described above, and, although not in accordance with the invention, this may be such that the same words as in the 1x speed audio data stream are spoken quickly, and separately recorded, or the same music may be played quickly and separately recorded.

For example, if the 1x speed audio data stream a1 is played back at standard speed, the 1x speed audio signal A1 has the waveform shown in the upper part of FIG. 3. Meanwhile, when the 2x speed audio data stream a2 having the same content as the 1x speed audio data stream a1 is played back at the fast listening speed, the 2x speed audio signal A2 has the waveform shown in the lower part of FIG. 3, which is a waveform wherein the 1x speed audio signal A1 has been compressed by a factor of two on the time axis.

At this time, the playback time X2, when the 2x speed audio data stream a2 is played back at fast listening speed, is half the playback time X1, when 1x speed audio data stream a1 is played back at standard speed, but because the pitch conversion processing described above and the like have been performed, there is no change in the tone, so that audio having the same tone as the 1x speed audio signal A1, which is very easy to understand, can be played back.

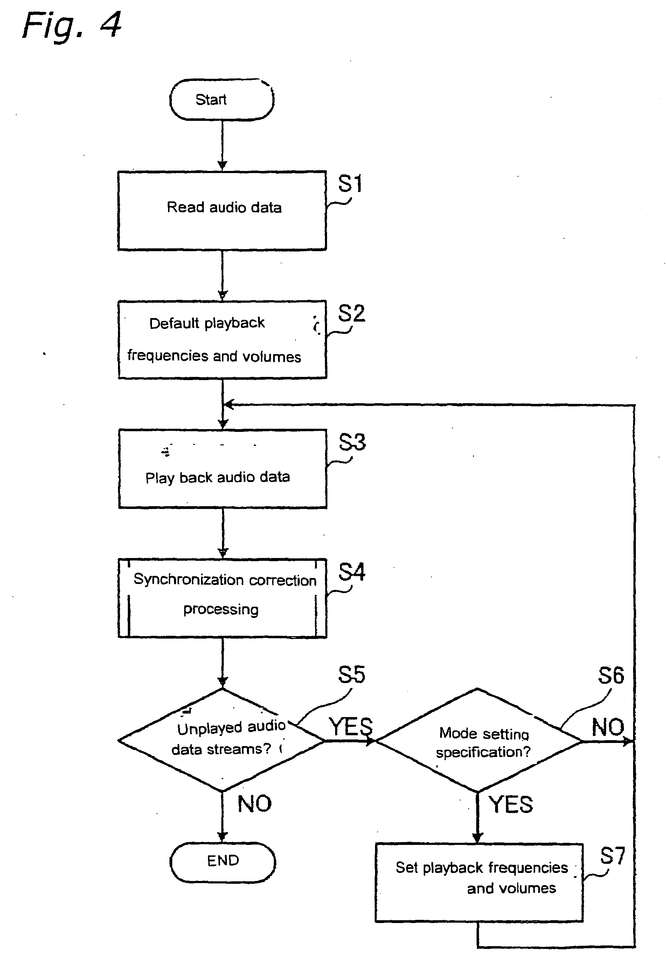

Next, description will be provided of the audio playback processing, which is realized by way of the videogame device shown in FIG. 2, which executes the audio playback program stored on the recording medium 300. FIG. 4 is a flowchart illustrating one example of audio playback processing implemented by the videogame device shown in FIG. 2.

First, in step 1, the playback conditions determining unit 111 reads the 1 x speed audio data stream a1 and the 2x speed audio data stream a2, which are stored on the recording medium 300, and stores these in the storage unit 102.

Next, in step 2, the playback conditions determining unit 111 sets the frequencies and the volumes for the 1x speed audio data stream a1 and the 2x speed audio data stream a2 in the audio playback unit 112, on the basis of the audio playback speed mode specification command. In this case, the audio playback speed mode specification command is a previously determined default audio playback speed mode specification command or an audio playback speed mode specification command that has already been set by the user using the operating unit 103.

Specifically, if this is set to the standard speed playback mode as a result of receiving the standard speed playback mode specification command, the playback conditions determining unit 111 sets the playback frequency and the volume for the 1x speed audio data stream a1 to a playback frequency that is the same as the basic frequency for the 1x speed audio data stream a1 and to a standard volume (for example, a midpoint volume in the volume adjustment range) and sets the playback frequency and the volume for the 2x speed audio data stream a2 to a playback frequency that is one half of the basic frequency of the 2x speed audio data stream a2 and to a silent volume (0 volume). Note that, the basic frequency is the playback frequency for playing back the audio data streams a1 and a2 without adjusting the playback frequency in order to change the playback speed.

Meanwhile, if set to the fast listening speed playback mode as a result of receiving the fast listening speed playback mode specification command, the playback conditions determining unit 111 sets the playback frequency and the volume for the 1x speed audio data stream a1 to a playback frequency is twice the basic frequency of the 1x speed audio data stream a1 and to silence, and sets the playback frequency and the volume for the 2x speed audio data stream a2 to a playback frequency that is the same as the basic frequency of for the 2x speed audio data stream a2 and to the standard volume.

Next, in step S3, the audio playback unit 112 reads the 1x speed audio data stream a1 and the 2x speed audio data stream a2 from the storage unit 102 and plays back the 1 x speed audio data stream a1 and the 2x speed audio data stream a2 at the playback frequencies and volumes set in step S2, so that the audio output unit 101 outputs the audio that is played back.

Specifically, in the case of the standard speed playback mode, the audio playback unit 112 plays back the 1x speed audio data stream a1 at a playback frequency that is the same as the basic frequency for the 1x speed audio data stream a1 and at the standard volume, while it plays back the 2x speed audio data stream a2 at a playback frequency that is one half of the basic frequency for the 2x speed audio data stream a2 and at a silent volume, so that the audio output unit 101 outputs only the 1x speed audio that is played back using the 1x speed audio data stream a1.

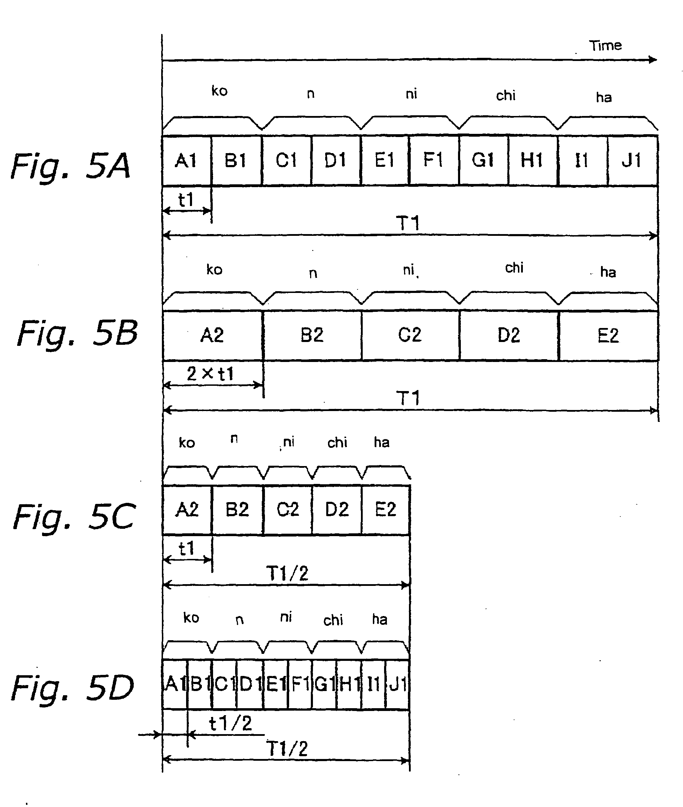

Meanwhile, in the case of the fast listening speed playback mode, the audio playback unit 112 plays back the 1x speed audio data stream a1 at a playback frequency that is twice the.basic frequency for the 1x speed audio data stream a1 and at silent volume while it plays back the 2x speed audio data stream a2 at a playback frequency that is the same as the basic frequency for the 2x speed audio data stream a2 and at the standard volume, and the audio output unit 101 outputs only the 2x speed audio that is played back using the 2x speed audio data stream a2. Here, the audio played back in the standard speed playback mode and the fast listening speed playback mode are described in detail. FIG. 5 is a schematic view used to describe the audio in standard speed playback mode and fast listening speed playback mode.

Note that, in FIG. 5, in order to facilitate the description, as an example of the 1x speed audio data stream a1, the 1x speed audio data has been constituted so as to output the sound "konnichiwa" ("hello") from the 1x speed audio data A1 to J1; when the 1x speed audio data A1 and B1 are played back, the sound "ko" is output; when the 1x speed audio data C1 and D1 are played back, the sound "n" is output; when the 1 x speed audio data E1 and F1 are played back, the sound "ni" is output; when the 1x speed audio data G1 and H1 are played back, the sound "chi" is output; and when the 1 x speed playback data I1 and J1 are played back, the sound "wa" is output.

Furthermore, as an example of the 2x speed audio data stream a2, the 2x speed audio data has been constituted so as to output the sound "konnichiwa" from the 2x speed audio data A2 to E2; when the 1x speed audio data A2 is played back, the sound "ko" is output; when the 1x speed audio data B2 is played back, the sound "n" is output; when the 1x speed audio data C2 is played back, the sound "ni" is output; when the I x speed audio data D2 is played back, the sound "chi" is output; and when the 1x speed audio data E2 is played back, the sound "wa" is output.

First, in the case of the standard speed playback mode, as shown in FIG. 5 (a), the 1x speed audio data A1 to J1 are successively played back at a playback period t1 (the reciprocal of the basic frequency for the 1x speed audio data stream a1), so as to output the sound "konnichiwa" at a normal tone, and at a standard volume, in a playback time T1. Meanwhile, as shown in FIG. 5 (b), the 2x speed audio data A2 to E2 are successively played back synchronized at a playback period 2 x t1 (the reciprocal of half of the basic frequency of the 2x speed audio data stream a2) so as to output the sound "Konnichiwa" at a tone that is one octave lower than a normal tone, and at a silent volume, in the playback time T1.

Thus, in the standard speed playback mode, the 1x speed audio data A1 to J 1 and the 2x speed audio data A2 to E2 are played back in synchronization, but because the 2x speed audio, which is reproduced from the 2x speed audio data A2 to E2 at a tone that is one octave lower, is output at a silent volume, the user does not hear this, and the user can only hear the normal tone audio resulting from the 1x speed audio data A1 to J1 at a normal speed.

Next, in the case of fast listening speed playback mode, as shown in FIG. 5(c), the 2x speed audio data A2 to E2 are successively played back at a playback period t1 (the reciprocal of the basic frequency for the 2x speed audio data stream a2) so as to output the sound "Konnichiwa" at a normal tone, and at the standard volume, in a playback time T1/2. Meanwhile, as shown in FIG. 5(d), the 1x speed audio data A1 to J1 are successively played back in synchronized at the playback period t1/2 (the reciprocal of twice the basic frequency of the 1x speed audio data stream a1) so as to output the sound "Konnichiwa" at a tone that is one octave higher than an ordinary pitch, and at a silent volume, in the playback time T1/2.

Thus, in the fast listening speed playback mode, the 1x speed audio data A1 to J1 and the 2x speed audio data A2 to E2 are played back in synchronization, but because the audio, which is reproduced from the 1x speed audio data A1 to J2 at a tone that is one octave higher, is output at a silent volume, the user does not hear this, and the user can only hear the normal tone audio resulting from the 2x speed audio data A2 to E2 at double speed.

Once again referring to FIG. 4, in step S4, the audio playback unit 112 performs the synchronization correction processing described below. This synchronization correction processing is processing wherein, if the playback timings (playback position) for the 1x speed audio data stream a1 and the 2x speed audio data stream a2, which are to be played back in synchronization, do not correspond, the playback frequency set in step S2 is corrected so that the playback timings of the 1x speed audio data stream a1 and the 2x speed audio data stream a2 are once again synchronized.

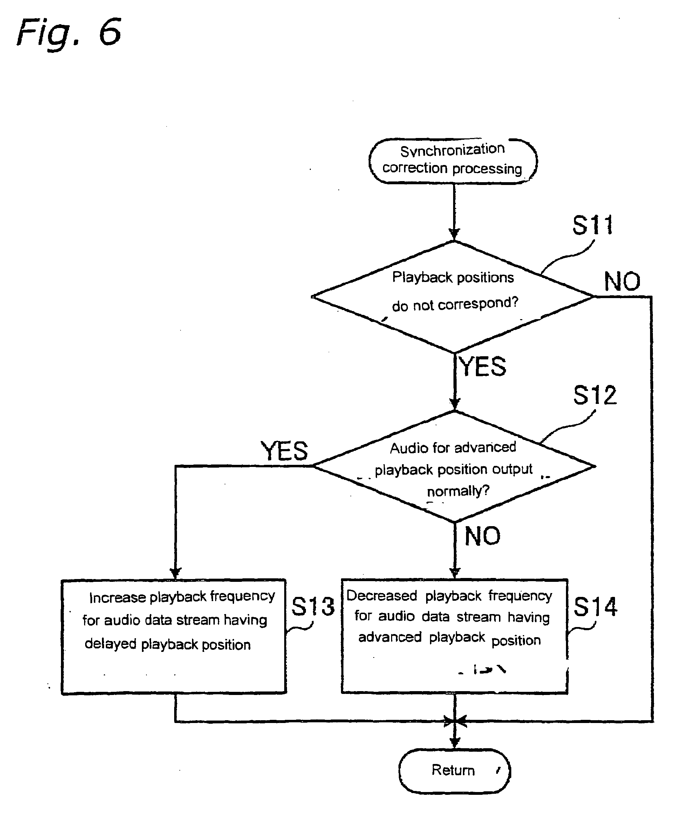

FIG. 6 is a flowchart illustrating one example of synchronization correction processing shown in FIG. 4. First, in step S11, the audio playback unit 112 determines whether or not the playback timings of the 1x speed audio data stream a1 and the 2x speed audio data stream a2 are out of synchronization. If it is not determined that the playback timings are not out of synchronization (NO, at step S11), the audio playback unit 112 returns to step 5, as shown in FIG. 4, without changing the playback frequencies of the 1x speed audio data stream a1 and the 2x speed audio data stream a2, which were set in step S2.

Meanwhile, if it is determined that the playback timings are out of synchronization (YES, at step S11), in step S 12, the audio playback unit 112 determines whether whichever of the 1x speed audio data stream a1 and the 2x speed audio data stream a2 has the advanced playback position is output at the normal volume (S12).

If it is determined that the leading audio data is output at the normal volume (YES, at step S12), in step S 13, the audio playback unit 112 changes the playback frequency for the audio data that is delayed so as to increase the preset playback frequency to greater than the preset playback frequency so that the playback position of the delayed audio data (the audio data that is output at silent volume) catches up to the advanced audio data, and returns to step 5 shown in FIG. 4.

Meanwhile, if it is determined that the advanced audio data is not to be output at the normal volume, which is to say, that the delayed audio data is to be output at the normal volume (NO, at step S12), in step S 14, the audio playback unit 112 changes the playback frequency of the audio data that is in advance so as to decrease the preset playback frequency to less than the preset playback frequency, so that the audio data that is in advance (the audio data that is to be output at silent volume) matches the audio data that is delayed, and returns to step 5 shown in FIG. 4.

By means of the synchronization correction processing described above, if the playback timings for the 1x speed audio data stream a1 and the 2x speed audio data stream a2, which are to be played back in synchronization, are out of synchronization, the playback frequency set in step S2 can be corrected so that the playback timings of the 1x speed audio data stream a1 and the 2x speed audio data stream a2 are once again synchronized.

Note that, in the example described above, synchronization correction processing is performed by changing the playback frequency, but the present invention is not limited to this example, and in step S13 the playback position of the delayed audio data may be changed so that it matches the playback position of the audio data that is in advance, and in step S 14 the playback position of the advanced audio data may be changed so that it matches the playback position of the delayed audio data.

Once again referring to FIG. 4, in step S5, the playback conditions determining unit 111 determines whether or not there are present in the storage unit 102 any 1 x speed audio data streams a1 and 2x speed audio data streams a2, which have not been played back. If it is determined that there are no 1x speed audio data streams a1 or 2x speed audio data streams a2 that have not been played back present (NO, at step S5), the audio playback processing ends.

On the other hand, if it is determined that there are present a 1x speed audio data stream a1 and a 2x speed audio data stream a2 that have not been played back (YES, at step S5), in step S6, the playback conditions determining unit 111 determines whether or not a new audio playback speed mode specification command has been received from the user by the operating unit 103. If it is determined that a new audio playback speed mode specification command has not been received (NO, at step S6), step S3 is returned to and the subsequent processing is continued.

If it is determined that a new audio playback speed mode specification command has been received (YES, at step S6), in step 7, the playback conditions determining unit 111 sets the playback frequency and volume in the audio playback unit 112 according to the audio playback speed mode specification command that was received, and thereafter step S3 is returned to and the subsequent processing is continued. Thus, if the audio playback speed mode has been switched, the playback frequencies and volumes of the 1x speed audio data stream a1 and the 2x speed audio data stream a2 are changed according to the audio playback speed mode.

For example, if a change was made from the standard speed playback mode to the fast listening speed playback mode, the playback conditions determining unit 111 changes the playback frequency and volume for the 1x speed audio data stream a1 in the audio playback unit 112, from a playback frequency that is the same as the basic frequency for the 1x speed audio data stream a1 and a standard volume, to a playback frequency which is twice the basic frequency for the 1x speed audio data stream a1 and a silent volume. Then, the playback conditions determining unit 111 changes the playback frequency and volume for the 2x speed audio data stream a2 in the audio playback unit 112, from a playback frequency that is half the basic frequency for the 2x speed audio data stream a2 and a silent volume, to a playback frequency that is the same as the basic frequency for the 2x speed audio data stream a2 and the standard volume. Consequently, if the audio playback speed mode is switched while the 1x speed audio is being output at the standard speed, the 2x speed audio is output at fast listening speed without changing the tone.

Meanwhile, if a change is made from the fast listening speed playback mode to the standard speed playback mode, the playback conditions determining unit 111 changes the playback frequency and volume for the 1x speed audio data stream a1 in the audio playback unit 112, from a playback frequency that is double the basic frequency for the 1x speed audio data stream a1 and silent volume, to a playback frequency which is the same as the basic frequency of the 1x speed audio data stream a1 and the standard volume. Then, the playback conditions determining unit 111 changes the playback frequency and volume for the 2x speed audio data stream a2 in the audio playback unit 112, from a playback frequency that is the same as the basic frequency for the 2x speed audio data stream a2 and the standard volume, to a playback frequency that is half the basic frequency for the 2x speed audio data stream a2 and silent volume. Consequently, if the audio playback speed mode is switched while the 2x speed audio is being output at the fast listening speed, the 1x speed audio is output at standard speed without the tone changing.

As described above, in this mode of embodiment, the 2x speed audio data stream a2, which is the audio data for the fast listening speed, is stored in advance on the recording medium 300, and the 2x speed audio data stream a2 is played back and output in fast listening speed playback mode. Consequently, audio for fast listening, which the user can understand, is played back in a natural manner without the tone becoming one octave higher than the normal tone. Furthermore, the 1x speed audio data stream a1 and the 2x speed audio data stream a2 are always played back in synchronization. Consequently, the user can hear the audio that is played back at the desired speed without any unnatural sensation as a result of changing the audio playback speed mode, even while the standard audio or fast listening audio is being output. Consequently, the user can, for example, playback audio that they are not interested in hearing at double speed and playback audio that they are interested in hearing at normal speed.

In the foregoing description, description was made of a case wherein audio data streams having the same playback speeds were played back synchronously, for switching between standard audio and fast listening audio, but in the present invention various audio data streams having differing playback speeds are played back synchronously.

Hereinafter a method for synchronously playing back two audio data streams having different playback speeds is described. For example, by playing back both audio data streams so that the ratio of the completed playback time to the total playback time of each audio data stream is the same for each audio data stream, or by playing back both audio data streams while comparing the ratios of the completed playback time to the total playback time for both audio data streams, two audio data streams having different playback speeds can be played back synchronously.

Furthermore, by playing back both audio data streams so that the ratio of the remaining playback time (the time resulting from subtracting the completed playback time from the total playback time) relative to the total playback time of the data stream is the same for both data streams, and by playing back both data streams while comparing the ratios of the remaining playback time to the total playback time for both data streams, it is possible to synchronously play back two audio data streams having differing playback speeds.

Alternatively, check-flagged audio data streams may be used, wherein a predetermined check flag, distinguishable from the audio data, is inserted into both audio data streams at predetermined data increments, such as, at each predetermined unit of time, at each syllable, at each word, or at each character, so that, by playing back both audio data streams while comparing the playback timing of the check flags in each audio data stream, it is possible to synchronously play back two audio data streams having differing playback speeds.

By way of playback methods such as those described above, the present invention can be similarly applied to audio data streams having various different playback speeds; for example, in place of, or in addition to, a 2x speed audio data stream, this may be similarly applied to an Fx speed (where F is an integer) audio data stream for Fx speed playback such as a 1/2x speed audio data stream for slow playback or a 3x speed audio data stream for even faster playback. Furthermore, an Fx speed audio data stream such as described above is preferably used for unaltered Fx speed playback, but is not necessarily limited to this, and an Fx speed audio data stream may be used at an F1x playback speed in the vicinity of the Fx speed, such as 0.8xF to 1.2xF. In this case, the playback frequency may be set to a value such as that found by the Fx speed audio data stream playback frequency × F ö F 1.

### Second Embodiment

Next, a videogame device according to a second mode of embodiment of the present invention is described. This mode of embodiment is such that, in addition to the synchronous playback of the 1x speed audio and the 2x speed audio in the first mode of embodiment, characters or the like representing the audio that is output are displayed synchronously with this audio. Here, while the game program data including the audio playback program, which is stored on the recording medium 300, is different, the structure of the videogame device is the same as that shown in FIG. 1, and therefore pictorial representation and description of the hardware structure is omitted.

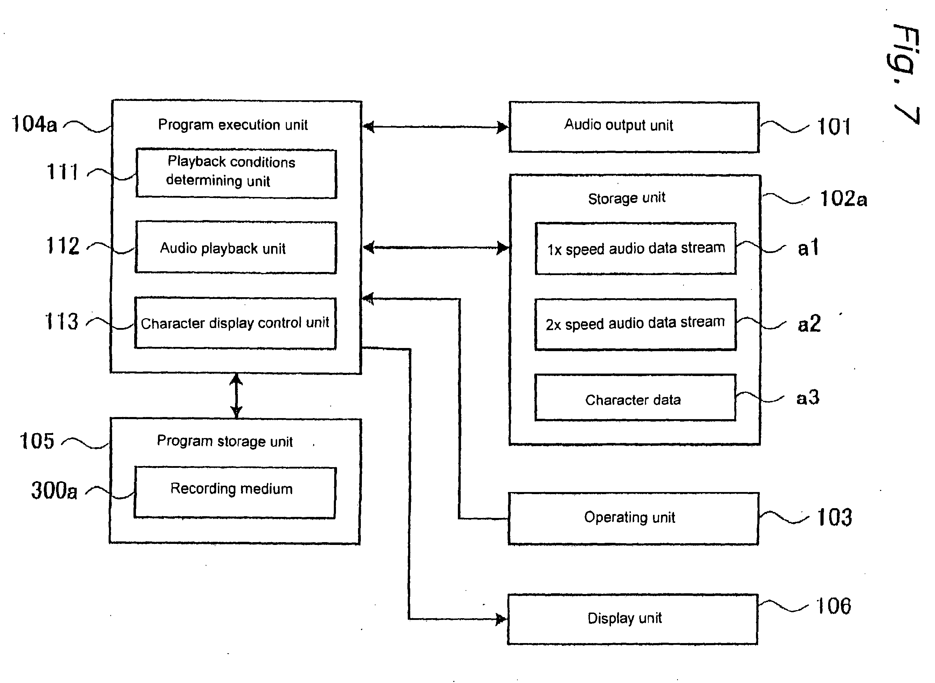

FIG. 7 is a functional block diagram illustrating the principal functions of a videogame device according to the second mode of embodiment. Note that, in the videogame device shown in FIG. 7, identical reference numerals are used for parts having similar functions as those in the video game device shown in FIG. 2, and detailed description thereof is omitted. Hereinbelow the characteristic components of this mode of embodiment are described.

The videogame device shown in FIG. 7 further comprises a display unit 106 for displaying characters; a program execution unit 104a further comprises a character display control unit 113; and a storage unit 102a further stores character data a3. The character display control unit 113 generates characters for display on the display unit 106 on the basis of the character data a3 stored in the storage unit 102, and displays these generated characters on the display unit 106 in synchronization with the playback of the aforementioned 1x speed audio and 2x speed audio.

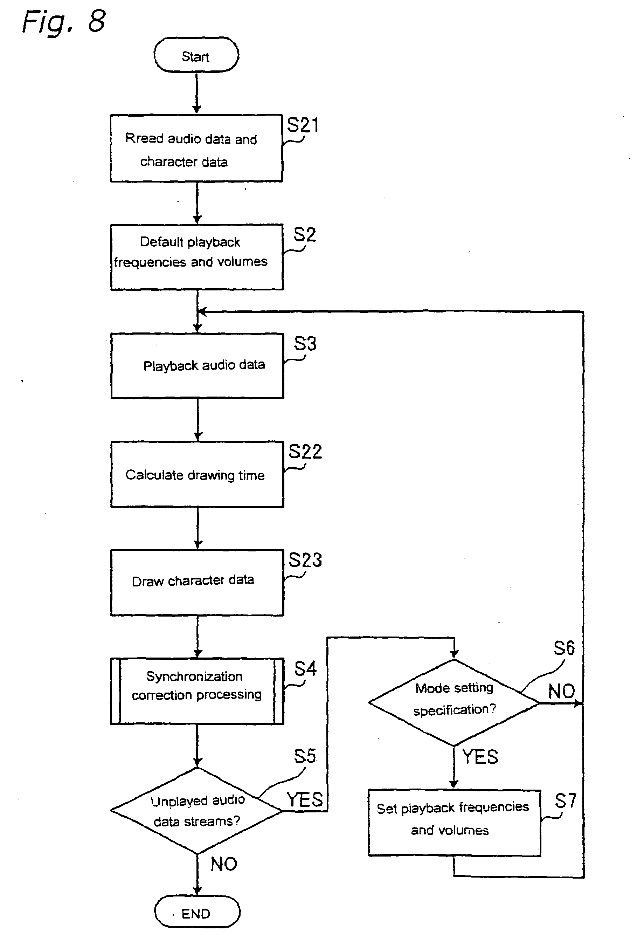

Next, description will be provided of the audio playback processing, which is realized by way of the videogame device shown in FIG. 7, which executes the audio playback program stored on a recording medium 300a. FIG. 8 is a flowchart illustrating one example of audio playback processing implemented by the videogame device shown in FIG. 7. Note that, in the steps in the flowchart shown in FIG. 8, like symbols are used to indicate steps in which the processing executed is the same as in steps in the flowchart shown in FIG. 4, and detailed description thereof is omitted.

First, in step 21, the playback conditions determining unit 111 reads the 1x speed audio data stream a1 and the 2x speed audio data stream a2, which are stored on the recording medium 300a, and stores these in the storage unit 102a. Furthermore, the character display control unit 113 reads the character data a3 corresponding to the 1 x speed audio data stream a1 and the 2x speed audio data stream a2, which is read by the playback conditions determining unit 111, from the recording medium 300a and stores this in the storage unit 102a. Here, the character data a3 is data for drawing character strings that provide written representation of the audio that is played back using the 1x speed audio data stream a1 and the 2x speed audio data stream a2. In this mode of embodiment, the 1x speed audio data stream a1, the 2x speed audio data stream a2 and the character data a3 are made up of data wherein one text segment is taken as one unit.

Next, after executing the same processing as in step S2 and step S3 in the first mode of embodiment, at step S22, the character display control unit 113 divides the playback time of the 1x speed audio data stream a1 or the 2x speed audio data stream a2, played back in step S3, by the number of characters contained in one segment of text so as to calculate the drawing time for each character.

Next, in step 23, the character display control unit 113 reads the character data a3 from the storage unit 102a and successively displays the characters on the display unit 106 in accordance with the drawing time calculated in step S22. Thereafter, after executing the same processing as in steps S4 to S7 in the first mode of embodiment, step S3 is returned to, and the processing continues.

In this manner, in this mode of embodiment, the characters drawn using the character data a3 are successively displayed in synchronization with at least one of the audios output using the 1x speed audio data stream a1 and the 2x speed audio data stream a2. Consequently, it is possible to synchronize the audio output and the character display so that the user can receive information both visually and audibly.

Note that, in the description given above, the drawing time per character was calculated, but the present invention is not limited to this example, and the number of characters comprised in a segment of text may be divided by the playback time of the 1x speed audio data stream a1 or the 2x speed audio data stream a2 corresponding to one segment of text, so as to find the number of characters to be drawn per unit of time, which is to say the drawing speed, and the characters may be drawn in a predetermined direction, such as from left to right or from top to bottom, in accordance with this drawing speed.

Furthermore, a playback-time table or the audio data-size table, as described below, may be prepared in advance and stored in the storage unit 102a in advance so that characters can be displayed in synchronization with the audio using these tables.

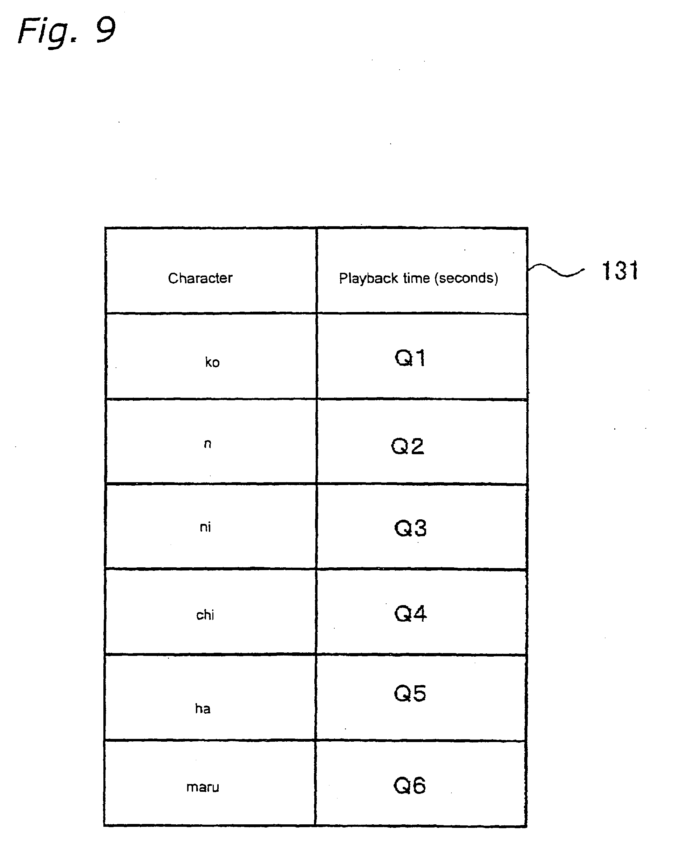

FIG. 9 is a schematic view illustrating one example of the data structure in a playback-time table. The playback-time table 131 shown in FIG. 9 stores settings for each character in the character data a3 that constitutes one segment of text, "konnichiwa." ("Hello.") for the playback time intervals Q1 to Q6 (seconds) at standard playback speed. For example, at standard speed, which is to say when in standard speed playback mode, the character display control unit 113 references the playback-time table 131 that is stored in the storage unit 102a. Then, when the 1x speed audio data stream a1 corresponding to the character "ko" is played back in the playback time interval Q1, the character display control unit 113 displays the character "ko" on the display unit 106, using the character data a3 corresponding to the character "ko", during the playback time interval Q1. Likewise, the character display control unit 113 successively displays the characters "n", "ni", "chi", "wa" and ".", on the display unit 106 during the playback time intervals Q2, Q3, Q4, Q5 and Q6. Meanwhile, at the fast listening speed, which is to say when in fast listening speed playback mode, the character display control unit 113 successively displays the characters on the display unit 106 in the same manner as described above, with the playback time intervals Q1 to Q6 halved.

Note that, in the example described above, the playback-time table was set up based on the playback times at standard speed, but the present invention is not limited to this example, and the playback-time table may be set up based on the playback times at fast listening speed, or the playback-time table may be set up based on the playback times for both of the standard speed and the fast listening speed. Furthermore, in the cases described above, the characters may be drawn in a predetermined direction, such as from left to right or from top to bottom, in accordance with the displayable writing speeds within the playback times.

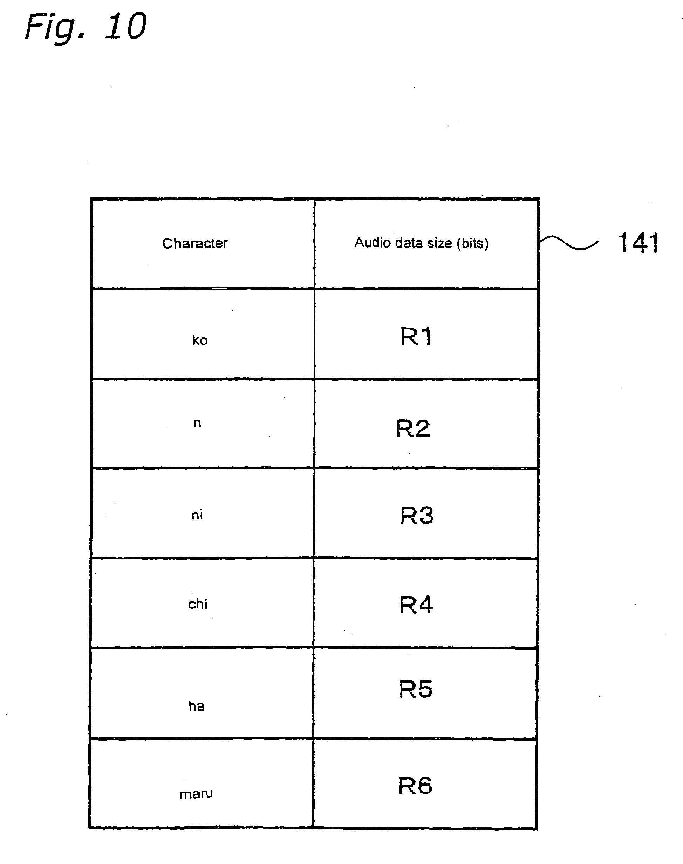

FIG. 10 is a schematic view illustrating one example of a data structure in an audio data-size table. The audio data-size table 141 shown in FIG. 10 stores the audio data sizes R1 through R6 (bits) of the 1x speed audio data stream a1 corresponding to each of the characters of the character data a3 that makes up one segment ("Konnichiwa."). For example, the character display control unit 113 references the audio data-size table 141 stored in the storage unit 102a. Then, if the audio data size of the 1x speed audio data stream a1 currently being played back is within the audio data size R1, the character display control unit 113 displays the character "ko" on the display unit 106 using the character data a3 corresponding to the character "ko". Likewise, the character display control unit 113 compares the audio data size of the 1x speed audio data stream a1 currently being played back and the audio data sizes R2, R3, R4, R5 and R6, and successively displays the characters "n", "ni", "chi", "wa" and "." on the display unit 106. Meanwhile, at fast listening speed, which is to say, when in fast listening playback mode, the character display control unit 113 converts the audio data sizes R1 to R6 into audio data sizes for the 2x speed audio data stream a2 and successively displays each character on the display unit 106 in the same manner as described above.

Note that, in the example described above, the audio data-size table was set up based on the audio data-sizes for the 1x speed audio data stream a1, but the present invention is not limited to this example, and the audio data-size table may be set up on the basis of the audio data sizes for the 2x speed audio data stream a2 or the audio data-size table may be set up on the basis of the audio data sizes for each of the audio data streams. Furthermore, in the cases described above, the characters may be drawn in a predetermined direction, such as from left to right or from top to bottom, in accordance with the displayable drawing speeds within the playback times corresponding to the audio data sizes.

### Third Embodiment

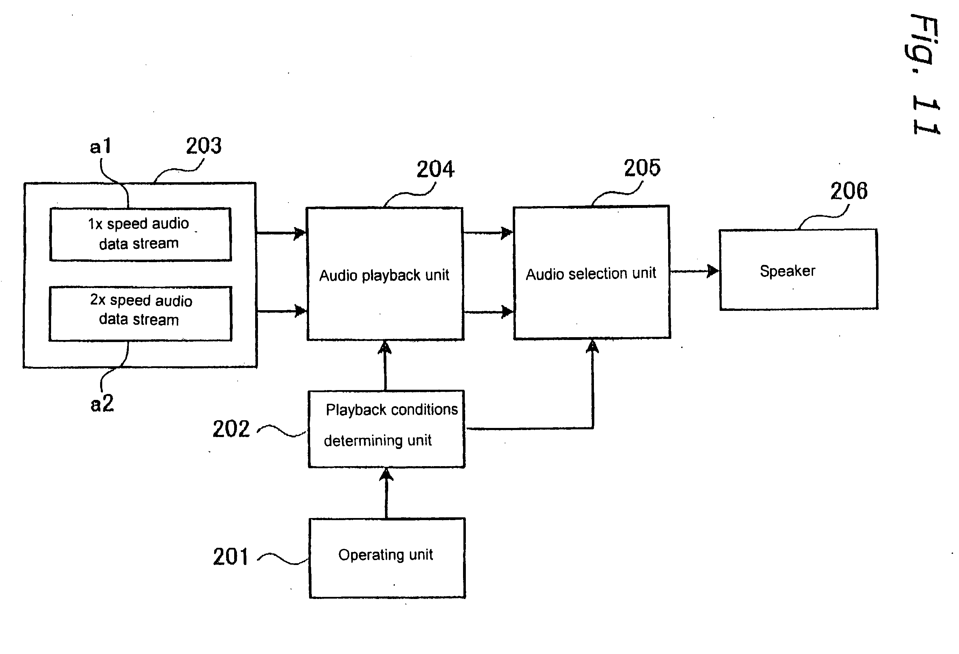

Next, an audio playback device according to a third mode of embodiment of the present invention will be described. FIG. 11 is a block diagram illustrating the structure of an audio playback device according to the third mode of embodiment of present invention. Note that a CD (Compact Disc) player, an MD (Mini-Disc) player, a DVD (Digital Versatile Disc) player and the like are applicable as examples of the audio playback device according to this mode of embodiment, and audio playback processing is primarily executed by the hardware.

The audio playback device shown in FIG. 11 comprises an operating unit 201, a playback conditions determining unit 202, a storage unit 203, an audio playback unit 204, an audio selection unit 205, and a speaker 206.

The storage unit 203 comprises a drive device for a recording medium such as a CD and the like and outputs the 1x speed audio data stream a1 and the 2x speed audio data stream a2 recorded on the recording medium to the audio playback unit 204 in accordance with the instructions from the audio playback unit 204. The operating unit 203 receives audio playback speed mode specification commands from the user. Note that the audio playback speed mode specification commands are the same as in the first mode of embodiment. Furthermore, there are no particular restrictions on the data format of the 1x speed audio data stream a1 and the 2x speed audio data stream a2, and, for example, the 1x speed audio data stream a1 and 2x speed audio data stream a2 shown in FIG. 3 can be used.

The playback conditions determining unit 202 sets the playback frequencies of the 1x speed audio data stream a1 and the 2x speed audio data stream a2 in the audio playback unit 204 so that the 1x speed audio data stream a1 and the 2x speed audio data stream a2 are played back synchronously at the speed corresponding to the audio playback speed mode specification command received by the operating unit 201. Furthermore, the playback conditions determining unit 202 controls the audio selection unit 205 so that the user can only hear one of the 1x speed audio or the 2x speed audio, according to the audio playback speed mode specification command.

The audio playback unit 204 synchronously plays back the 1x speed audio data stream a1 and the 2x speed audio data stream a2 at the playback frequencies set by the playback conditions determining unit 202, and outputs the 1x speed audio signal and the 2x speed audio signal to the audio selection unit 205. The audio selection unit 205 outputs one of the 1x speed audio signal or the 2x speed audio signal to the speaker 206, according to the specifications of the playback conditions determining unit 202. The speaker 6 outputs audio in response to the audio signal input thereto.

With the constitution described above, when the user has selected the standard speed playback mode with the operating unit 201, the audio playback unit 204 reads the 1x speed audio data stream a1 and the 2x speed audio data stream a2 from the storage unit 203 and successively plays back the 1x speed audio data stream a1 at a playback frequency that is the same as the basic frequency for the 1x speed audio data stream a1, so as to output the 1x speed audio signal at the standard speed. Then, the audio playback unit 204 successively plays back the 2x speed audio data stream a2 at a playback frequency which is one half of that of the 2x speed audio data stream a2, in synchronization with the 1x speed audio data stream a1, so as to output the 2x speed audio signal at the standard speed. At this time, the audio selection unit 205 outputs only the 1 x speed audio signal to the speaker 206 so that the user can only hear audio at a normal tone, based on the 1x speed audio data stream a1, at the standard speed.

Meanwhile, when the user has selected the fast listening speed playback mode with the operating unit 201, the audio playback unit 204 reads the 1x speed audio data stream a1 and the 2x speed audio data stream a2 from the storage unit 203 and successively plays back the 2x speed audio data stream a2 at a playback frequency that is the same as that of the 2x speed audio data stream a2 so as to output the 2x speed audio signal for the fast listening speed. Then, the audio playback unit 204 successively plays back the 1x speed audio data stream a1 in synchronization with the 2x speed audio data stream a2 at a playback frequency that is twice that of this 1x speed audio data stream a1, so as to output the 1x speed audio signal at 2x speed. At this time, the audio selection unit 205 outputs only the 2x speed audio signal to the speaker 206, so that the user can only hear audio at a normal tone, based on the 2x speed audio data stream a2, at 2x speed.

Note that, in the embodiments described above, 1x speed audio data and 2x speed audio data were described as the data for audio playback, but the present invention is not limited to this example, and the present invention can be similarly applied to audio data for playing back music and the like.

Furthermore, in the embodiments described above, cases were described wherein 1 x speed audio data and 2x speed audio data were stored beforehand on a recording medium or the like, but the present invention is not limited to this example, and these may be transmitted by network transmission using the Internet, an intranet or the like.

### Industrial Applicability

Playback speeds can be instantaneously switched without creating an unnatural sensation because there is no need for audio processing such as producing audio data that corresponds to a playback speed when the playback speed is changed. Furthermore, it is possible to output natural sounding audio, without variation in the playback tone or the like when the playback speed is changed, because it is possible to devote ample processing time to producing audio data corresponding to the playback speeds beforehand.

It is possible to output audio using audio data streams that were produced in advance for each playback speed. Even if the audio playback speed is switched at this time, it is possible to output the same audio content. Furthermore, audio processing such as producing a second audio data stream from a first audio data stream is not necessary, and when played back at the second playback speed, the second audio data stream can be used to playback natural sounding audio without variations in tone or the like. Consequently, it is possible to switch audio playback speeds without creating an unnatural sensation and without placing an excessive load on hardware such as the CPU.

In particular, when the present invention is used in a videogame device, wherein not only audio processing, but also image processing is important, it is possible to assign sufficient CPU processing capacity to complex image processing, and therefore it is possible to display various images in real time, while playing back natural sounding audio at various playback speeds.

The user can listen to the audio at desired playback speeds, and while listening to one of the audios, can switch to another audio. At this time, even if the audios are switched while outputting an audio, there is no variation in the pitch or the like between the audio output in the first audio speed mode and the audio output in the second audio speed mode, and therefore natural sounding audio, which can be listened to comfortably, can be played back without creating an unnatural sensation before and after switching.

The user can listen to natural sounding audio at a desired speed, including a standard speed and a high speed, making it possible to listen to only that audio which one is interested in hearing at the standard speed, and to skip over the audio which one is not interested in hearing by playing it back at the high speed, as well as to listen to the audio at the high speed when one does not have much time, so that the audio can be listened to according to various usage methods.

Synchronization processing of the first and second audio data streams can be performed without adding synchronization processing specific data, such as check flags, to the first and second audio data streams. Consequently, it is possible to limit the data size of the audio data streams to the minimum necessary size and to use audio data in various formats as the first and second audio data streams directly, without additional processing.

It is possible to playback the first and second audio data streams, with high accuracy synchronization to predetermined audio playback segments, making it possible to playback audios, with high accuracy synchronization, in a manner whereby the audio that is played back is easy to understand.

It is possible to correct non-synchronization without impacting the audio that is output, allowing for stable playback of natural sounding audio, which is comfortable to listen to, without creating an unnatural sensation before and after switching.

It is possible to display characters on the display screen in synchronization with the audio that is being played back, making it possible to convey this to the user visually and audibly, so as to achieve a presentation that is easy to understand.

It is possible to perform synchronization processing for the characters and the audio without calculating the playback time, making it possible to perform the synchronization processing at high speeds, without placing an excessive load on hardware such as the CPU.

It is possible to perform synchronization processing of the characters and the audio without adding synchronization processing specific data such as check flags to the character data, making it possible to reduce the data size of the character data to the minimum required size, and to use character data in various formats as the character data without modification.

Audio processing, such as producing audio data streams corresponding to playback speeds when these playback speeds are changed, is unnecessary, and it is possible to change the audio playback speed instantaneously without creating an unnatural sensation. Furthermore, it is possible to dedicate ample processing time to producing audio data streams corresponding to playback speeds in advance. Consequently, when playback speeds are changed, it is possible to output natural sounding audio without variations in tone or the like, while placing a relatively small processing load on hardware such as the CPU.

## Claims

1. An audio playback program for playing back audio using audio data, the audio playback program causing a computer to function as:
audio storage means (102a) storing a plurality of audio data streams (a1, a2); **characterised by**
playback means (112) synchronously rendering the audio data streams in a form that can be output; wherein
the plurality of audio data streams are prepared in advance in order to play back predetermined audio at a plurality of different playback speeds, without change in the tone wherein each audio data stream corresponds to one of the playback speeds; the audio playback program further causing the computer to function as audio output means (101) outputting audio based on an audio data stream that corresponds to a playback speed when the audio is to be output at any one of the playback speeds;
wherein the audio storage means (102a) stores as a first audio data stream (a1) a normal audio data stream that is prepared in advance in order to play back predetermined audio at a standard speed, and stores as the second audio data stream (a2) a high-speed audio data stream that is prepared in advance in order to play back audio that has the same content as the audio that is played back using the normal audio data stream at a playback speed that is faster than the standard speed; and
the audio output means (101) outputs standard speed audio based on the normal audio data stream when the audio is to be output at the standard speed, and outputs high-speed audio based on the high-speed audio data stream when the audio is to be output at high speed.

2. The audio playback program recited in claim 1, wherein the playback means plays back the first and second audio data streams (a1; a2) so that the playback positions of the first and second audio data streams read from the audio storage means (102a) correspond, and renders the first and second audio streams in a form that can be output as audio in accordance the first and second audio data streams; and
the audio output means (101) outputs a first audio based on the first audio data stream played back by the playback means when audio is to be output at the first playback speed, and outputs a second audio based on the second audio data stream played back by the playback means when the audio is to be output at the second playback speed.

3. The audio playback program recited in claim 2, wherein the program further causes the computer to function as operating means receiving operations by which a user selects one of a first playback speed mode for playing back the audio output by the audio output means at the first playback speed, and a second playback speed mode for playing back the audio output by the audio output means at the second playback speed; and
wherein the audio output means (101) outputs one audio based on the first or second audio data streams (a1; a2) in accordance with the playback speed mode received by the operating means.

4. The audio playback program recited in any one of claims 2 to 3, wherein the playback means plays back the first and second audio data streams (a1; a2) so that the playback positions of the first and second audio data streams correspond, based on the amount of playback time completed or the amount of playback time remaining in the first and second audio data streams.

5. The audio playback program recited in any one of claims 2 to 3, wherein the audio storage means (102a) stores the first and second audio data streams (a1; a2) with check flags inserted at predetermined segments of the audio that is to be played back; and
the playback means plays back so that the playback positions of the first and second audio data streams correspond, based on the playback timing of the check flags in the first and second audio data streams.

6. The audio playback program recited in any one of claims 2 to 5, wherein when the playback positions of the first and second data streams (a1; a2) have shifted, the playback means adjusts the playback speed of the second audio data stream so as to correspond to the playback position of the first audio data stream when the audio is output at the first playback speed, and adjusts the playback speed of the first audio data stream so as to correspond to the playback position of the second audio data stream when the audio is output at the second playback speed.

7. The audio playback program recited in any one of claims 2 to 6, wherein the program further causes the computer to function as character storage means (102a) storing character data (a3) for generating characters that represent the content of the audio that is played back from the first and second audio data streams (a1; a2); and
display means (106) displaying the characters that are represented by the character data that is read from the character storage means in sync with at least one of the first and second audios output by the audio output means (101).

8. The audio playback program recited in claim 7, wherein the display means (106) displays the characters represented by the character data (a3) read from the character storage means (102a) in sync with at least one of the first and second audios output by the audio output means (101), based on the playback times of the first and second audio data streams corresponding to the characters represented by the character data.

9. The audio playback program recited in claim 8, wherein the playback times are stored in advance for each of the characters, and the display means (106) displays the characters in sync with the audio by referencing the playback times that are stored for the characters that are to be displayed.

10. The audio playback program recited in claim 7, wherein the display means (106) displays the characters represented by the character data (a3) that is read from the character storage means (102a) in sync with at least one of the first and second audios output by the audio output means, based on the data size of the first and second audio data streams (a1; a2) corresponding to the characters represented by the character data.

11. An audio playback method for using audio data streams to play back audio on a computer, **characterised by** the steps of:
preparing a plurality of audio data streams (a1; a2) in advance in order to play back predetermined audio at a plurality of different playback speeds without change in the tone, wherein each of the plurality of audio data streams corresponds to one of the playback speeds; synchronously rendering the plurality of audio data streams in a form that can be output; and
outputting audio based on an audio data stream corresponding to a playback speed when the audio is to be output at any one of the playback speeds;
wherein preparing a plurality of audio data streams further comprises preparing as a first audio data stream (a1) a normal audio data stream in order to play back predetermined audio at a standard speed, and preparing as a second audio data (a2) stream a high-speed audio data stream in order to play back audio that has the same content as the audio that is played back using the normal audio data stream at a playback speed that is faster than the standard speed; and
wherein outputting audio based on an audio data stream further comprises outputting standard speed audio based on the normal audio data stream when the audio is to be output at the standard speed, and outputting high-speed audio based on the high-speed audio data stream when the audio is to be output at high speed.

12. An audio playback device which uses audio data to play back audio, comprising:
audio storage means (102a) storing a plurality of audio data streams (a1; a2); **characterised by**
playback means (112) for synchronously rendering the audio data streams in a form that can be output; wherein the audio data streams are prepared in advance in order to play back predetermined audio at a plurality of different playback speeds without change in the tone, wherein each audio data stream corresponds to one of the playback speeds;
the audio playback device further comprising:
audio output means (101) for outputting audio based on an audio data stream corresponding to a playback speed when the audio is output at any one of the playback speeds;
wherein the audio storage means (102a) stores as a first audio data stream (a1) a normal audio data stream that is prepared in advance in order to play back predetermined audio at a standard speed, and stores as the second audio data stream (a2) a high-speed audio data stream that is prepared in advance in order to play back audio that has the same content as the audio that is played back using the normal audio data stream at a playback speed that is faster than the standard speed; and
the audio output means (101) outputs standard speed audio based on the normal audio data stream when the audio is to be output at the standard speed, and outputs high-speed audio based on the high-speed audio data stream when the audio is to be output at high speed.

## Patentansprüche

1. Audio-Abspielprogramm zum Abspielen von Audio unter Verwendung von Audio-Daten, wobei das Audio-Abspielprogramm bewirkt, dass ein Computer arbeitet als:
Audio-Speichermittel (102a), das eine Vielzahl von Audio-Datenströmen (a1, a2) speichert; **gekennzeichnet durch**
ein Abspielmittel (112), das die Audio-Datenströme synchron in einer Form vorlegt, die ausgegeben werden kann; **dadurch gekennzeichnet, dass**
die Vielzahl von Audio-Datenströmen im Voraus aufbereitet werden, um vorgegebenes Audio mit einer Vielzahl von unterschiedlichen Abspielgeschwindigkeiten ohne einen Veränderung im Klang abzuspielen, wobei jeder Audio-Datenstrom einer der Abspielgeschwindigkeiten entspricht;
wobei das Audio-Abspielprogramm weiterhin bewirkt, dass ein Computer arbeitet als:
Audio-Ausgabemittel (101), das Audio basierend auf einem Audio-Datenstrom ausgibt der einer Abspielgeschwindigkeit entspricht, wenn das Audio mit einer der Abspielgeschwindigkeiten ausgegeben werden soll;
wobei das Audio-Speichermittel (102a) als einen ersten Audio-Datenstrom (a1) einen normalen Audio-Datenstrom speichert, der im Voraus aufbereitet wird, um vorgegebenes Audio mit einer Standardgeschwindigkeit abzuspielen, und als den zweiten Audio-Datenstrom (a2) einen Audio-Datenstrom mit hoher Geschwindigkeit speichert, der im Voraus aufbereitet wird, um Audio, das den gleichen Inhalt aufweist wie das Audio, das unter Verwendung des normalen Audio-Datenstroms abgespielt wird, mit einer Abspielgeschwindigkeit abzuspielen die schneller ist als die Standardgeschwindigkeit; und wobei
das Audio-Ausgabemittel (101) Audio mit Standardgeschwindigkeit basierend auf dem normalen Audio-Datenstrom ausgibt, wenn das Audio mit der Standardgeschwindigkeit ausgegeben werden soll, und Audio mit hoher Geschwindigkeit basierend auf dem Audio-Datenstrom mit hoher Geschwindigkeit ausgibt, wenn das Audio mit hoher Geschwindigkeit ausgegeben werden soll.

2. Audio-Abspielprogramm gemäß Anspruch 1, wobei das Abspielmittel die ersten und zweiten Audio-Datenströme (a1; a2) so abspielt, dass die aus dem Audio-Speichermittel (1 02a) gelesenen Abspielpositionen der ersten und zweiten Audio-Datenströme übereinstimmen, und die ersten und zweiten Audio-Ströme in einer Form vorlegt, die in Übereinstimmung mit den ersten und zweiten Audio-Datenströmen als Audio ausgegeben werden kann; und
das Audio-Ausgabemittel (101) ein erstes Audio basierend auf dem ersten durch das Abspielmittel abgespielten Audio-Datenstrom ausgibt wenn Audio mit der ersten Abspielgeschwindigkeit ausgegeben werden soll, und ein zweites Audio basierend auf dem zweiten durch das Abspielmittel abgespielten Audio-Datenstrom ausgibt wenn das Audio mit der zweiten Abspielgeschwindigkeit ausgegeben werden soll.

3. Audio-Abspielprogramm gemäß Anspruch 2, wobei das Programm weiterhin bewirkt, dass der Computer als Betriebsmittel arbeitet, das Funktionen empfängt, durch die ein Benutzer eines auswählt aus einem ersten Abspielgeschwindigkeitsmodus zum Abspielen der Audio-Ausgabe durch das Audio-Ausgabemittel mit der ersten Abspielgeschwindigkeit und einem zweiten Abspielgeschwindigkeitsmodus zum Abspielen der Audio-Ausgabe durch das Audio-Ausgabemittel mit der zweiten Abspielgeschwindigkeit; und
wobei das Audio-Ausgabemittel (101) ein Audio basierend auf den ersten oder zweiten Audio-Datenströmen (a1; a2) in Übereinstimmung mit dem durch das Betriebsmittel empfangenen Abspielgeschwindigkeitsmodus ausgibt.

4. Audio-Abspielprogramm gemäß einem der Ansprüche 2 bis 3, wobei das Abspielmittel die ersten und zweiten Audio-Datenströme (a1; a2) so abspielt, dass die Abspielpositionen der ersten und zweiten Audio-Datenströme übereinstimmen, basierend auf dem Umfang der vollendeten Abspielzeit oder dem Umfang der verbleibenden Abspielzeit in den ersten und zweiten Audio-Datenströmen.

5. Audio-Abspielprogramm gemäß einem der Ansprüche 2 bis 3, wobei das Audio-Speichermittel (102a) die ersten und zweiten Audio-Datenströme (a1; a2) mit an vorgegebenen Abschnitten des abzuspielenden Audio eingefügten Kontrollmarkierungen speichert; und
das Abspielmittel so abspielt, dass die Abspielpositionen der ersten und zweiten Audio-Datenströme übereinstimmen, basierend auf der Abspielzeitsteuerung der Kontrollmarkierungen in den ersten und zweiten Audio-Datenströmen.

6. Audio-Abspielprogramm gemäß einem der Ansprüche 2 bis 5, wobei, wenn sich die Abspielpositionen der ersten und zweiten Audio-Datenströme (a1; a2) verschoben haben, das Abspielmittel die Abspielgeschwindigkeit des zweiten Audio-Datenstroms so einstellt, dass dieser mit der Abspielpositionen des ersten Audio-Datenstroms übereinstimmt wenn das Audio mit der ersten Abspielgeschwindigkeit ausgegeben wird, und die Abspielgeschwindigkeit des ersten Audio-Datenstroms so einstellt, dass dieser mit der Abspielpositionen des zweiten Audio-Datenstrom übereinstimmt wenn das Audio mit der zweiten Abspielgeschwindigkeit ausgegeben wird.

7. Audio-Abspielprogramm gemäß einem der Ansprüche 2 bis 6, wobei das Programm weiterhin bewirkt, dass der Computer als Zeichenspeichermittel (102a) arbeitet, das Zeichendaten (a3) zur Erzeugung von Zeichen speichert, die den Inhalt des Audio repräsentieren das von den ersten und zweiten Audio-Datenströmen (a1; a2) abgespielt wird; und
Anzeigemittel (106), die die Zeichen anzeigen, die durch die Zeichendaten repräsentiert werden, die synchronisiert mit zumindest einem der ersten und zweiten durch das Audio-Ausgabemittel (101) ausgegebenen Audios aus dem Zeichenspeichermittel gelesen werden.

8. Audio-Abspielprogramm gemäß Anspruch 7, wobei das Anzeigemittel (106) die Zeichen anzeigt, die durch die Zeichendaten (a3) repräsentiert werden, die aus dem Zeichenspeichermittel (102a) synchronisiert mit zumindest einem der ersten und zweiten durch das Audio-Ausgabemittel (101) ausgegebenen Audios gelesenen werden, basierend auf den Abspielzeiten der ersten und zweiten Audio-Datenströme entsprechend den durch die Zeichendaten repräsentierten Zeichen.

9. Audio-Abspielprogramm gemäß Anspruch 8, wobei die Abspielzeiten für jedes der Zeichen im Voraus gespeichert werden, und das Anzeigemittel (106) die Zeichen synchronisiert mit dem Audio anzeigt durch Bezugnahme auf die Abspielzeiten, die für die Zeichen gespeichert sind, die angezeigt werden sollen.

10. Audio-Abspielprogramm gemäß Anspruch 7, wobei das Anzeigemittel (106) die Zeichen anzeigt, die von den Zeichendaten (a3) repräsentiert werden, die von dem Zeichenspeichermittel (1 02a) synchronisiert mit zumindest einem von den ersten und zweiten durch das Audio-Ausgabemittel ausgegebenen Audios gelesen werden, basierend auf der Datengröße der ersten und zweiten Audio-Datenströme (a1; a2), die den durch die Zeichendaten repräsentierten Zeichen entsprechen.

11. Audio-Abspielverfahren zur Verwendung von Audio-Datenströmen um Audio auf einem Computer abzuspielen, **gekennzeichnet durch** die Schritte:
Erstellen einer Vielzahl von Audio-Datenströmen (a1; a2) im Voraus, um vorgegebenes Audio mit einer Vielzahl von unterschiedlichen Abspielgeschwindigkeiten abzuspielen ohne den Klang zu verändern, wobei jeder der Vielzahl von Audio-Datenströmen mit einer der Abspielgeschwindigkeiten korrespondiert;
synchrones Aufbereiten der Vielzahl von Audio-Datenströmen in eine Form die ausgegeben werden kann; und
Ausgeben von Audio basierend auf einem Audio-Datenstrom der mit einer Abspielgeschwindigkeit übereinstimmt wenn das Audio mit einer der Abspielgeschwindigkeiten ausgegeben werden soll;
wobei das Erstellen einer Vielzahl von Audio-Datenströme weiterhin aufweist das Erstellen eines normalen Audio-Datenstrom als einen ersten Audio-Datenstrom (a1) um vorgegebenes Audio mit einer Standardgeschwindigkeit abzuspielen, und Erstellen eines Audio-Datenstroms mit einer hohen Geschwindigkeit als einen zweiten Audio-Daten-Strom (a2), um Audio, das den gleichen Inhalt aufweist wie das Audio das unter Verwendung des normalen Audio-Datenstroms abgespielt wird mit einer Abspielgeschwindigkeit abzuspielen, die schneller ist als die Standardgeschwindigkeit; und
wobei das Ausgeben von Audio basierend auf einem Audio-Datenstrom weiterhin aufweist das Ausgeben von Audio in Standardgeschwindigkeit basierend auf dem normalen Audio-Datenstrom wenn das Audio mit der Standardgeschwindigkeit ausgegeben werden soll, und das Ausgeben von Audio mit hoher Geschwindigkeit basierend auf dem Audio-Datenstrom mit hoher Geschwindigkeit wenn das Audio mit hoher Geschwindigkeit ausgegeben werden soll,

12. Audio-Abspieleinrichtung, die Audio-Daten verwendet um Audio abzuspielen, die aufweist:
Audio-Speichermittel (102a), das eine Vielzahl von Audio-Datenströmen (a1; a2) speichert; **gekennzeichnet durch**
Abspielmittel (112) zur synchronen Aufbereitung der Audio-Datenströme in einer Form, die ausgegeben werden kann; wobei die Audio-Datenströme im Voraus erstellt werden, um vorgegebenes Audio mit einer Vielzahl von unterschiedlichen Abspielgeschwindigkeiten abzuspielen ohne den Klang zu verändern, wobei jeder Audio-Datenstrom mit einer der Abspielgeschwindigkeiten übereinstimmt;
wobei die Audio-Abspieleinrichtung weiterhin aufweist:
Audio-Ausgabemittel (101) zum Ausgeben von Audio basierend auf einem Audio-Datenstrom der mit einer Abspielgeschwindigkeit übereinstimmt wenn das Audio mit einer der Abspielgeschwindigkeiten ausgegeben wird;
wobei das Audio-Speichermittel (102a) einen normalen Audio-Datenstrom, der im Voraus erstellt wird, als einen ersten Audio-Datenstrom (a1) speichert, um vorgegebenes Audio mit einer Standardgeschwindigkeit abzuspielen, und einen Audio-Datenstrom hoher Geschwindigkeit, der im Voraus erstellt wird, als den zweiten Audio-Datenstrom (a2) speichert, um Audio, das den gleichen Inhalt aufweist wie das Audio, das unter Verwendung des normalen Audio-Datenstrom abgespielt wird mit einer Abspielgeschwindigkeit abzuspielen, die schneller ist als die Standardgeschwindigkeit; und
das Audio-Ausgabemittel (101) Audio mit Standardgeschwindigkeit basierend auf dem normalen Audio-Datenstrom ausgibt, wenn das Audio mit der Standardgeschwindigkeit ausgegeben werden soll, und Audio mit hoher Geschwindigkeit basierend auf dem Audio-Datenstrom mit hoher Geschwindigkeit ausgibt, wenn das Audio mit hoher Geschwindigkeit ausgegeben werden soll.

## Revendications

1. Programme de reproduction audio pour une reproduction audio utilisant des données audio, le programme de reproduction audio amenant un ordinateur à fonctionner de la façon suivante :
des moyens de mémorisation audio (102a) mémorisant une pluralité de flux de données audio (al, a2) ; **caractérisé par**
des moyens de reproduction (112) restituant de façon synchrone les flux de données audio sous une forme qui peut être fournie en sortie ; dans lequel
la pluralité de flux de données audio est préparée à l'avance afin de reproduire du son prédéterminé à une pluralité de vitesses de reproduction différentes sans modification de la hauteur tonale, chaque flux de données audio correspondant à l'une des vitesses de reproduction ; le programme de reproduction audio amenant en outre l'ordinateur à fonctionner de la façon suivants :
des moyens de sortie audio (101) fournissant du son sur la base d'un flux de données audio qui correspond à une vitesse de reproduction lorsque le son doit être fourni en sortie à l'une quelconque des vitesses de reproduction ;
dans lequel les moyens de mémorisation audio (102a) mémorisent en tant que premier flux de données audio (a1) un flux de données audio normal qui est préparé à l'avance afin de reproduire du son prédéterminé à une vitesse standard, et mémorisent en tant que deuxième flux de données audio (a2) un flux de données audio à vitesse élevée qui est préparé à l'avance afin de reproduire du son, qui a le même contenu que le son qui est reproduit en utilisant le flux de données audio normal, à une vitesse de reproduction qui est plus rapide que la vitesse standard ; et
les moyens de sortie audio (101) fournissent en sortie du son à vitesse standard sur la base du flux de données audio normal lorsque le son doit être fourni en sortie à la vitesse standard et fournissent du son à vitesse élevée sur la base du flux de données audio à vitesse élevée lorsque le son doit être fourni en sortie à une vitesse élevée.

2. Programme de reproduction audio selon la revendication 1, dans lequel les moyens de reproduction reproduisent les premier et deuxième flux de données audio (a1 ; a2) de telle sorte que les positions de reproduction des premier et deuxième flux de données audio lus à partir des moyens de mémorisation audio (102a) correspondent, et restituent les premier et deuxième flux audio sous une forme qui peut être fournie en sortie sous forme de son conformément aux premier et deuxième flux de données audio ; et
les moyens de sortie audio (101) fournissent un premier son sur la base du premier flux de données audio reproduit par les moyens de reproduction lorsque du son doit être fourni à la première vitesse de reproduction, et fournissent un deuxième son sur la base du deuxième flux de données audio reproduit par les moyens de reproduction lorsque le son doit être fourni à la deuxième vitesse de reproduction.

3. Programme de reproduction audio selon la revendication 2, dans lequel le programme amène en outre l'ordinateur à fonctionner en tant que moyen d'actionnement recevant des opérations par lesquelles un utilisateur sélectionne un mode parmi un premier mode de vitesse de reproduction pour reproduire le son fourni par les moyens de sortie audio à la première vitesse de reproduction, et un deuxième mode de vitesse de reproduction pour reproduire le son fourni par les moyens de sortie audio à la deuxième vitesse de reproduction ; et
dans lequel les moyens de sortie audio (101) fournissent un son basé sur le premier ou le deuxième des flux de données audio (a1, a2) conformément aux modes de vitesse de reproduction reçus par les moyens d'actionnement.

4. Programme de reproduction audio selon l'une quelconque des revendications 2 à 3, dans lequel les moyens de reproduction reproduisent les premier et deuxième flux de données audio (a1 ; a2) de telle sorte que les positions de reproduction des premier et deuxième flux de données audio correspondent, sur la base de la quantité de temps de reproduction écoulé ou de la quantité de temps de reproduction restant dans les premier et deuxième flux de données audio.

5. Programme de reproduction audio selon l'une quelconque des revendications 2 à 3, dans lequel les moyens de mémorisation audio (102a) mémorisent les premier et deuxième flux de données audio (a1 ; a2) avec des drapeaux de marquage insérés au niveau de segments prédéterminés du son qui doit être reproduit ; et
les moyens de reproduction reproduisent de telle sorte que les positions de reproduction des premier et deuxième flux de données audio correspondent, sur la base de la position temporelle de reproduction des drapeaux de marquage dans les premier et deuxième flux de données audio.

6. Programme de reproduction audio selon l'une quelconque des revendications 2 à 5, dans lequel lorsque les positions de reproduction des premier et deuxième flux de données (a1 ; a2) se sont décalées, les moyens de reproduction ajustent la vitesse de reproduction du deuxième flux de données audio de façon à correspondre à la position de reproduction du premier flux de données audio lorsque le son est fourni à la première vitesse de reproduction, et ajustent la vitesse de reproduction du premier flux de données audio de façon à correspondre à la position de reproduction du deuxième flux de données audio lorsque le son est fourni à la deuxième vitesse de reproduction.

7. Programme de reproduction audio selon l'une quelconque des revendications 2 à 6, dans lequel le programme amène en outre l'ordinateur à fonctionner en tant que moyen de mémorisation de caractères (102a) pour mémoriser des données de caractères (a3) pour générer des caractères qui représentent le contenu du son qui est reproduit à partir des premier et deuxième flux de données audio (a1 ; a2) ; et
des moyens d'affichage (106) affichant les caractères qui sont représentés par les données de caractères qui sont lues dans les moyens de mémorisation de caractères en synchronisme avec au moins l'une des première et deuxième sorties audio par les moyens de sortie audio (101).

8. Programme de reproduction audio selon la revendication 7, dans lequel les moyens d'affichage (106) affichent les caractères représentés par les données de caractères (a3) lues à partir des moyens de mémorisation de caractères (102a) en synchronisme avec au moins l'un des premier et deuxième sons fournis par les moyens de sortie audio (101), sur la base des temps de reproduction des premier et deuxième flux de données audio correspondant aux caractères représentés par les données de caractères.

9. Programme de reproduction audio selon la revendication 8, dans lequel les temps de reproduction sont mémorisés à l'avance pour chacun des caractères, et les moyens d'affichage (106) affichent les caractères en synchronisme avec le son en faisant référence aux temps de reproduction qui sont mémorisés pour les caractères qui doivent être affichés.

10. Programme de reproduction audio selon la revendication 7, dans lequel les moyens d'affichage (106) affichent les caractères représentés par les données de caractères (a3) qui sont lues à partir des moyens de mémorisation de caractères (102a) en synchronisme avec au moins l'un des premier et deuxième sons fournis par les moyens de sortie audio, sur la base de la dimension des données des premier et deuxième flux de données audio (a1 ; a2) correspondant aux caractères représentés par les données de caractères.

11. Procédé de reproduction audio pour l'utilisation de flux de données audio pour reproduire du son sur un ordinateur, **caractérisé par** les étapes suivantes :
préparer une pluralité de flux de données audio (a1 ; a2) à l'avance afin de reproduire du son prédéterminé à une pluralité de vitesses de reproduction différentes sans modification de la hauteur tonale ; chacun de la pluralité de flux de données audio correspondant à l'une des vitesses de reproduction ;
restituer de façon synchrone la pluralité de flux de données audio sous une forme qui peut être fournie en sortie ; et
fournir du son sur la base d'un flux de données audio correspondant à une vitesse de reproduction lorsque le son doit être fourni à l'une quelconque des vitesses de reproduction ;
dans lequel la préparation d'une pluralité de flux de données audio comprend en outre la préparation, en tant que premier flux de données audio (a1), d'un flux de données audio normal afin de reproduire du son prédéterminé à une vitesse standard, et la préparation, en tant que deuxième flux de données audio (a2), d'un flux de données audio à vitesse élevée afin de reproduire du son qui a le même contenu que le son qui est reproduit en utilisant le flux de données audio normal, à une vitesse de reproduction qui est plus rapide que la vitesse standard ; et
dans lequel la fourniture de son sur la base d'un flux de données audio comprend en outre la fourniture de son à vitesse standard sur la base du flux de données audio normal lorsque le son doit être fourni à la vitesse standard, et la fourniture de son à vitesse élevée sur la base du flux de données audio à vitesse élevée lorsque le son doit être fourni à une vitesse élevée.

12. Dispositif de reproduction audio qui utilise des données audio pour reproduire du son, comprenant :
des moyens de mémorisation audio (102a) mémorisant une pluralité de flux de données audio (a1 ; a2) ; **caractérisé par**
des moyens de reproduction (112) pour restituer de façon synchrone les flux de données audio sous une forme qui peut être fournie en sortie ; les flux de données audio étant préparés à l'avance afin de reproduire du son prédéterminé à une pluralité de vitesses de reproduction différentes sans modification de la hauteur tonale, chaque flux de données audio correspondant à l'une des vitesses de reproduction ;
le dispositif de reproduction audio comprenant en outre :
des moyens de sortie audio (101) pour fournir du son sur la base d'un flux de données audio correspondant à une vitesse de reproduction lorsque le son est fourni à l'une quelconque des vitesses de reproduction,
dans lequel les moyens de mémorisation audio (102a) mémorisent en tant que premier flux de données audio (a1) un flux de données audio normal qui est préparé à l'avance afin de reproduire du son prédéterminé à une vitesse standard, et mémorisent en tant que deuxième flux de données audio (a2) un flux de données audio à vitesse élevée qui est préparé à l'avance afin de reproduire du son qui a le même contenu que le son qui est reproduit en utilisant le flux de données audio normal, à une vitesse de reproduction qui est plus rapide que la vitesse standard ; et
les moyens de sortie audio (101) fournissent du son à vitesse standard sur la base du flux de données audio normal lorsque le son doit être fourni à la vitesse standard, et fournissent du son à vitesse élevée sur la base du flux de données audio à vitesse élevée lorsque le son doit être fourni à vitesse élevée.
